# EUROPEAN PATENT APPLICATION

(11) **EP 2 568 618 A2**
(43) Date of publication of application: **13.03.2013**
(21) Application number: 11777561.9
(22) Date of filing: 03.05.2011
(51) Int. Cl.: H04B 1/40, G06F 3/041

(54) **METHOD AND APPARATUS FOR CONTROLLING THE DISPLAY OF A SCREEN IN A PORTABLE TERMINAL**

(30) Priority: 03.05.2010 KR 20100041311
(71) Applicant: Samsung Electronics Co., Ltd, Gyeonggi-do 443-742 (KR)
(72) Inventor: LEE, Shin-Jun, Yongin-si Gyeonggi-do 446-908 (KR); JUNG, Jin-He, Suwon-si Gyeonggi-do 443-738 (KR); KIM, Seong-Woon, Yongin-si Gyeonggi-do 448-532 (KR); SHIN, Dae-Kyu, Suwon-si Gyeonggi-do 443-744 (KR); RYU, Seung-Pyo, Suwon-si Gyeonggi-do 440-729 (KR); AHN, Sung-Joo, Seoul 151-836 (KR); LEE, Hyun-Jung, Seoul 121-799 (KR); SON, Tae-Hwan, Gyeonggi-do 441-400 (KR)
(74) Representative: Harrison Goddard Foote
(86) International application number: PCT/KR2011/003319
(87) International publication number: WO 2011/139080

(57) **Abstract**

A method and an apparatus for controlling screen display in a portable terminal are provided. In the method, whether a screen touch occurs is determined. When the screen touch occurs, whether the screen touch corresponds to a spiral touch is determined using coordinates at which the screen is touched. When the screen touch is the spiral touch, the screen is magnified or reduced.

## Description

### BACKGROUND OF THE INVENTION

### 1. Field of the Invention

The present invention relates to a method and an apparatus for controlling screen display in a portable terminal. More particularly, the present invention relates to a method and an apparatus for magnifying or reducing a screen and displaying the same depending on a user's touch.

### 2. Description of the Related Art

Recently, a portable terminal provides various functions for a user's convenience, and simultaneously, is miniaturized in a light weight. As the portable terminal is miniaturized, it is difficult to provide various input keys, and accordingly, methods for allowing a user to easily input information even in the miniaturized state are studied and provided. As an example, a portable terminal having a touchscreen panel as an input means is provided.

The portable terminal having the touchscreen as an input means provides a function for controlling display of a screen using the touchscreen, that is, a function for magnifying or reducing the screen. For example, the conventional portable terminal provides a screen magnify and reduce method using a multi-touch or a single touch.

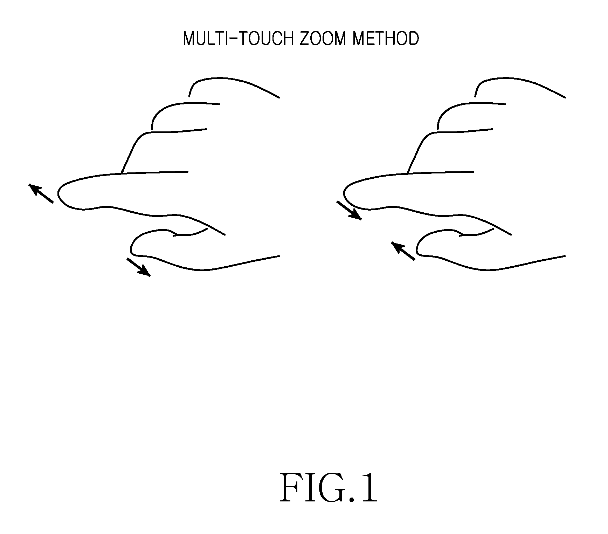

FIG. 1 illustrates a method for magnifying and reducing a screen using a multi-touch in a portable terminal according to the conventional art. As illustrated in FIG. 1, the method using the multi-touch recognizes two points touched by a user's two fingers and magnifies or reduces a screen and displays the same depending on a distance change of the two touch points. That is, since the multi-touch method performs screen magnification and reduction depending on a distance change of the two fingers that has touched the screen, a user has to repeat a motion of contacting the screen with his fingers to magnify or reduce the screen and then taking his fingers off the screen many times in order to magnify or reduce the screen to a desired level.

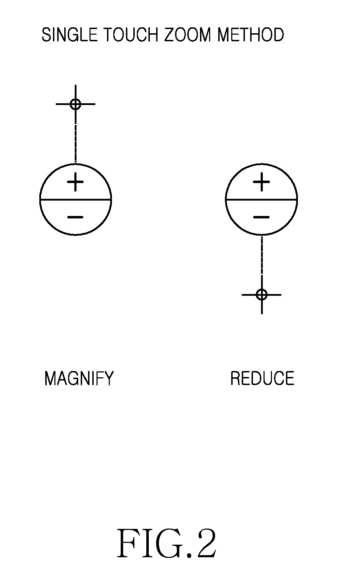

FIG. 2 illustrates a method for magnifying and reducing a screen using a single touch in a portable terminal according to the conventional art. As illustrated in FIG. 2, the method using the single touch generates a center point based on a position touched by a user in the portable terminal to show touch directions of magnification and reduction on a screen, and then magnifies or reduces the screen and displays the same depending on a direction of a position touched by the user based on the center point. That is, since the single touch method generates the center point and magnifies or reduces the screen based on the center point, a time for generating the center point is taken, and in the case where the portable terminal rotates or is put upside down, a touch direction for magnifying or reducing the screen changes in the user's viewpoint, so that confusion may be caused to the user.

### SUMMARY OF THE INVENTION

An aspect of the present invention is to address at least the above-mentioned problems and/or disadvantages and to provide at least the advantages described below. Accordingly, an aspect of the present invention is to provide a method and an apparatus for magnifying or reducing a screen and displaying the same depending on a user's touch in a portable terminal.

Another aspect of the present invention is to provide a method and an apparatus for magnifying or reducing a screen and displaying the same by recognizing a spiral touch in a portable terminal.

Still another aspect of the present invention is to provide a method and an apparatus for determining to magnify or reduce a screen using an amplitude of a spiral touch in a portable terminal.

In accordance with an aspect of the present invention, a method for controlling screen display in a portable terminal is provided. The method includes determining whether a screen touch occurs, when the screen touch occurs, determining whether the screen touch corresponds to a spiral touch using coordinates at which the screen is touched, and when the screen touch is the spiral touch, processing to magnify or reduce the screen.

In accordance with another aspect of the present invention, an apparatus for controlling screen display in a portable terminal is provided. The apparatus includes a touch sensor for detecting whether a screen touch occurs, a controller for, when the screen touch occurs, determining whether the screen touch corresponds to a spiral touch using coordinates at which the screen is touched, and a display unit for, when the screen touch is the spiral touch, processing to magnify or reduce the screen under control of the controller.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:
FIG. 1 is a view illustrating a method for magnifying and reducing a screen using a multi-touch in a portable terminal according to the conventional art;
FIG. 2 is a view illustrating a method for magnifying and reducing a screen using a single touch in a portable terminal according to the conventional art;
FIG. 3 is a view illustrating a method for magnifying and reducing a screen using a spiral touch method in a portable terminal according to an exemplary embodiment of the present invention;
FIG. 4 is a view illustrating a method for magnifying and reducing a screen using an amplitude of a spiral touch method in a portable terminal according to an exemplary embodiment of the present invention;
FIG. 5 is a block diagram illustrating a portable terminal according to an exemplary embodiment of the present invention;
FIG. 6 is a flowchart illustrating a procedure for magnifying or reducing a screen and displaying the same depending on a spiral touch in a portable terminal according to an exemplary embodiment of the present invention; and
FIG. 7 is a view illustrating a method for magnifying or reducing a screen depending on a spiral touch method in a portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

Hereinafter, a preferred embodiment of the present invention is described with reference to the accompanying drawings. Also, descriptions of well-known functions and constructions are omitted for clarity and conciseness.

Exemplary embodiments of the present invention provide a method and an apparatus for magnifying or reducing a screen and displaying the same by recognizing a spiral touch in a portable terminal.

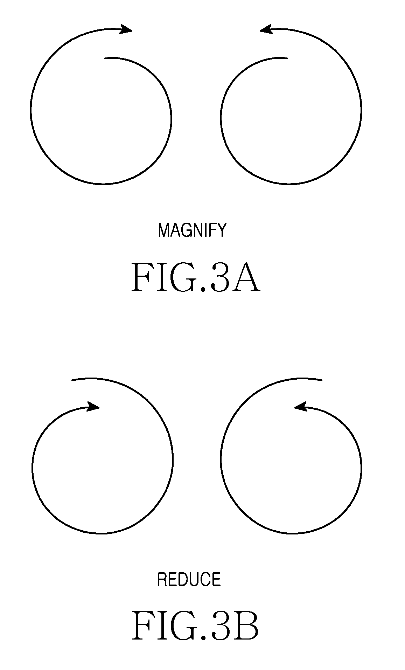

FIG. 3 illustrates a method for magnifying and reducing a screen using a spiral touch method in a portable terminal according to an exemplary embodiment of the present invention.

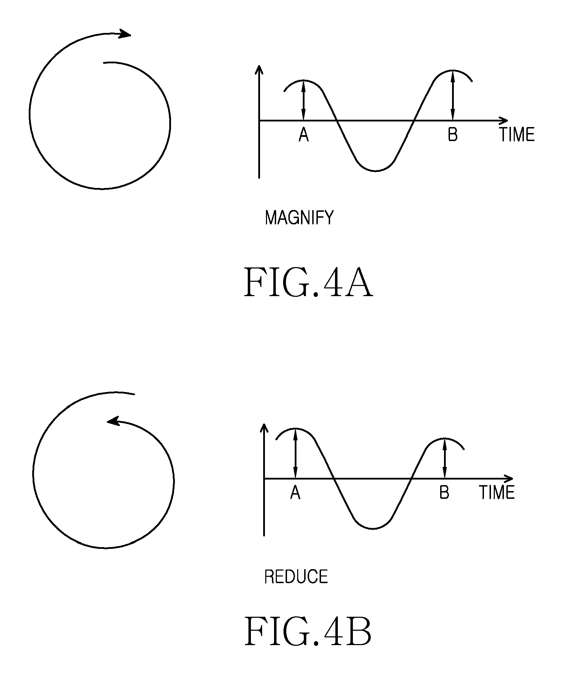

As illustrated in FIG. 3, the present invention recognizes a spiral shaped touch (referred to as a 'spiral touch' hereinafter) to magnify or reduce a screen. At this point, the present invention may magnify or reduce the screen depending on whether the spiral touch is a magnify type or a reduction type. That is, in the case where a spiral touch gets big more and more as illustrated in FIG. 3A, the screen may be magnified. In the where a spiral touch gets small more and more as illustrated in FIG. 3B, the screen may be reduced. Here, the portable terminal may measure an amplitude of a spiral touch to determine whether the spiral touch is the magnify type or the reduction type as illustrated in FIG. 4. That is, the portable terminal may compare an amplitude of a point A with an amplitude of a point B after a predetermined time has elapsed on the spiral touch to determine whether the spiral touch is the magnify type or the reduction type. For example, as illustrated in FIG. 4A, in the case where the amplitude of the point A is greater than the amplitude of the point B, the portable terminal may determine that the spiral touch is the magnify type. As illustrated in FIG. 4B, in the case where the amplitude of the point A is less than the amplitude of the point B, the portable terminal may determine that the spiral touch is the reduction type.

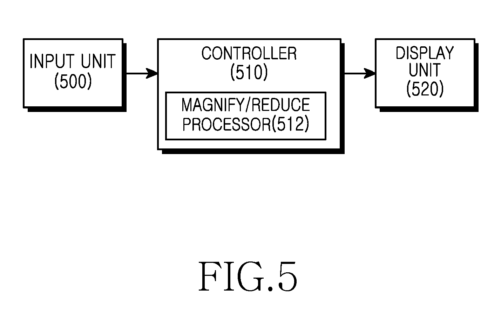

FIG. 5 is a block diagram illustrating a portable terminal according to an exemplary embodiment of the present invention.

Referring to FIG. 5, the portable terminal includes an input unit 500, a controller 510, and a display unit 520. The controller 510 includes a magnify/reduce processor 512.

The input unit 500 recognizes input information input from a user to provide the same to the controller 510. The input unit 500 includes at least one function key and a touch sensor for sensing a screen touch motion. The input unit 500 senses the user's touch motion to provide coordinates corresponding to the touched position to the controller 510. At this point, the input unit 500 provides data representing a start, continuation, and an end of the touch motion to the controller 510.

The controller 510 controls an overall operation of the portable terminal. In addition to the general functions, according to the present invention, the controller 510 processes a function for determining whether a motion of spirally touching a screen via the input unit 500 occurs to magnify or reduce the screen displayed on the display unit 520 by including the magnify/reduce processor 512. That is, the magnify/reduce processor 512 determines whether a user's touch motion corresponds to a spiral touch using touch coordinates provided from the input unit 500. When the user's touch motion corresponds to the spiral touch, the magnify/reduce processor 512 measures an amplitude of the spiral touch to determine whether the spiral touch is a magnify type or a reduction type as illustrated in FIG. 4. When determining that the spiral touch is the magnify type, the magnify/reduce processor 512 processes a function for magnifying the screen displayed on the display unit 520. When determining that the spiral touch is the reduction type, the magnify/reduce processor 512 processes a function for reducing the screen displayed on the display unit 520. At this point, the magnify/reduce processor 512 may determine a ratio for magnifying or reducing the screen depending on the number of times of occurrences of the spiral touch. For example, in the case where the spiral touch occurs one time, the magnify/reduce processor 512 may magnify or reduce the screen by a predetermined ratioα. In the case where the spiral touch successively occurs n times, the magnify/reduce processor 512 may magnify or reduce the screen by α x n.

The display unit 520 displays state information occurring during an operation of the portable terminal. The display unit 520 magnifies or reduces the screen and displays the same under control of the controller 100.

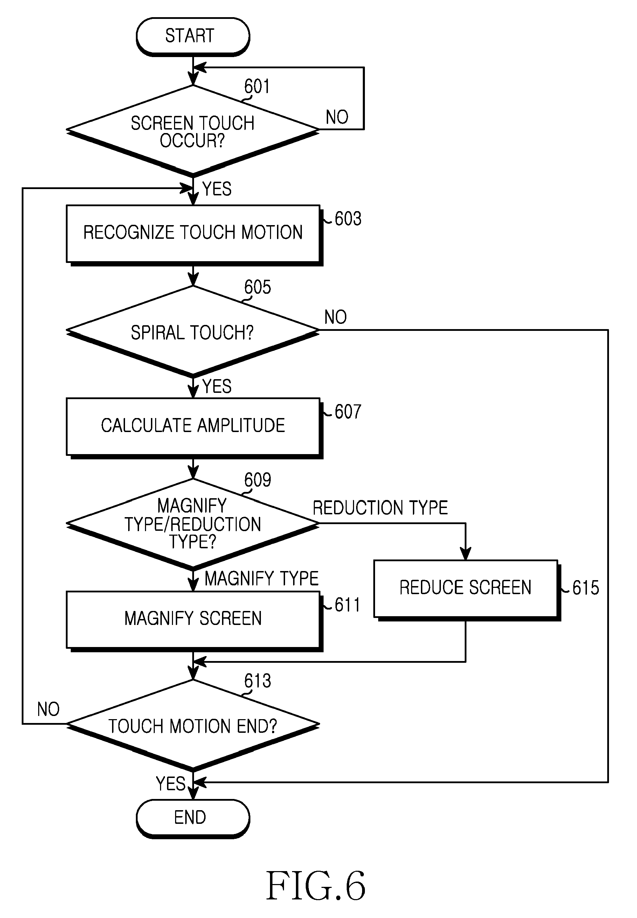

FIG. 6 is a flowchart illustrating a procedure for magnifying or reducing a screen and displaying the same depending on a spiral touch in a portable terminal according to an exemplary embodiment of the present invention.

Referring to FIG. 6, the portable terminal determines whether a screen touch occurs in step 601. When the screen touch occurs, the portable terminal proceeds to step 603 to recognize the screen touch motion, and then determines whether the touch is a spiral shaped touch in step 605. That is, the portable terminal analyzes coordinates of a position touched by a user via a touch sensor to determine whether the screen touch motion is performed in a spiral circle shape or a spiral polygon shape. At this point, in the case where the screen touch motion is not the spiral shape, the portable terminal performs an operation corresponding to the screen touch motion according to the conventional art and ends the algorithm according to the present invention.

In contrast, in the case where the screen touch motion is the spiral shape, the portable terminal measures an amplitude of the spiral touch in step 607, and proceeds to step 609 to determine whether the spiral touch is a magnify type or a reduction type based on the measured amplitude. Here, as illustrated in FIG. 4, in the case where an amplitude of a point A in a spiral touch is measured and an amplitude of a point B is measured after a predetermined time elapses, and when the amplitude of the point B is greater than the amplitude of the point A, the portable terminal determines that the spiral touch is the magnify type. When the amplitude of the point B is less than the amplitude of the point A, the portable terminal determines that the spiral touch is the reduction type.

In the case where the spiral touch is the magnify type, the portable terminal proceeds to step 611 to process to magnify the screen displayed on the display unit 520. In the case where the spiral touch is the reduction type, the portable terminal proceeds to step 615 to process to reduce the screen displayed on the display unit 520. Here, the portable terminal may magnify or reduce the screen by a predetermined ratio. At this point, the predetermined ratio may be changed by a user or a designer.

After that, the portable terminal determines whether the screen touch motion ends. The end of the touch motion denotes sensing a motion of removing the user's fingers or an external device contacting the screen from the screen.

When the screen touch motion does not end, the portable terminal returns to step 603 to re-perform subsequent steps. When the screen touch motion ends, the portable terminal ends the algorithm according to the present invention.

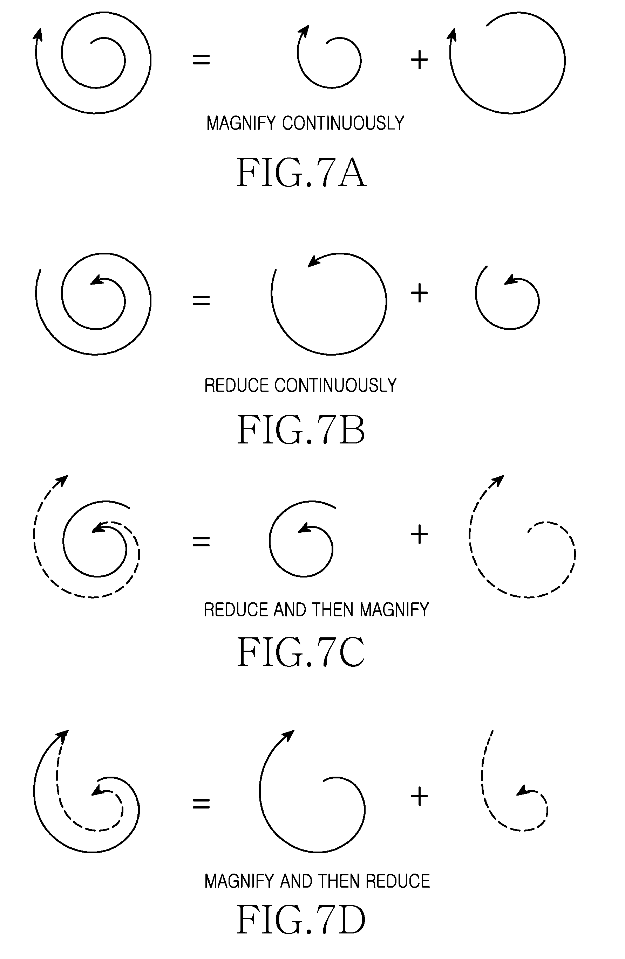

FIG. 7 is a view illustrating a method for magnifying or reducing a screen depending on a spiral touch method in a portable terminal according to an exemplary embodiment of the present invention.

Referring to FIG. 7, as illustrated in FIG. 7A, in the case where a spiral touch whose amplitude gradually increases occurs successively two times, the portable terminal may perform an operation for magnifying the screen by a predetermined ratio two times. As illustrated in FIG. 7B, in the case where a spiral touch whose amplitude gradually reduces occurs successively two times, the portable terminal may perform an operation for reducing the screen by a predetermined ratio two times.

Also, as illustrated in FIG. 7C, in the case where a spiral touch whose amplitude gradually reduces occurs one time and a spiral touch whose amplitude gradually increases occurs one time, the portable terminal may reduce the screen by a predetermined ratio and then magnify the screen again. As illustrated in FIG. 7D, in the case where a spiral touch whose amplitude gradually increases occurs one time and a spiral touch whose amplitude gradually reduces occurs one time, the portable terminal may magnify the screen by a predetermined ratio and then reduce the screen again.

Though whether to magnify or reduce the screen has been determined depending on whether the spiral touch increases or reduces regardless of a direction of the spiral touch in the above description, whether to magnify or reduce the screen may be determined depending on a direction of the spiral touch. For example, in the case where the spiral touch is performed to the right direction, the screen may be magnified, and in the case where the spiral touch is performed to the left direction, the screen may be reduced. Also, though whether to magnify or reduce the screen has been determined depending on whether the amplitude of the spiral touch increases or reduces in the above description, a degree by which the screen is magnified or reduced may be determined depending on a degree by which the amplitude of the spiral touch changes. For example, in the case where the amplitude of the spiral touch increases by A, a magnify ratio of the screen may be determined as A xβ. In the case where the amplitude of the spiral touch increases by B, a magnify ratio of the screen may be determined as B xβ.

According to the present invention, a portable terminal recognizes a spiral touch and magnifies or reduces a screen depending on an amplitude of the recognized spiral touch to display the same, so that a user may easily learn a method for magnifying or reducing the screen, and magnify or reduce the screen to a desired level without repeating a motion of contacting the screen with his fingers and removing his fingers from the screen, and a separate stand-by time for magnifying or reducing the screen is not taken.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. A method for controlling screen display in a portable terminal, the method comprising:
determining whether a screen touch occurs;
when the screen touch occurs, determining whether the screen touch corresponds to a spiral touch using coordinates at which the screen is touched; and
when the screen touch is the spiral touch, processing to magnify or reduce the screen.

2. The method of claim 1, wherein processing to magnify or reduce the screen comprises:
measuring an amplitude change of the spiral touch;
when the amplitude of the spiral touch changes in an increasing manner, magnifying the screen; and
when the amplitude of the spiral touch changes a decreasing manner, reducing the screen.

3. The method of claim 2, further comprising determining a screen magnify or reduction ratio depending on a change pattern of the amplitude.

4. The method of claim 1, wherein processing to magnify or reduce the screen comprises:
determining a direction of the spiral touch; and
magnifying or reducing the screen depending on the direction of the spiral touch.

5. The method of claim 1, wherein the spiral touch comprises at least one of a spiral circle shaped touch and a spiral polygon shaped touch.

6. An apparatus for controlling screen display in a portable terminal, the apparatus comprising:
a touch sensor for detecting whether a screen touch occurs;
a controller for, when the screen touch occurs, determining whether the screen touch corresponds to a spiral touch using coordinates at which the screen is touched; and
a display unit for, when the screen touch is the spiral touch, processing to magnify or reduce the screen under control of the controller.

7. The apparatus of claim 6, wherein the controller measures an amplitude change of the spiral touch, determines to magnify the screen when the amplitude of the spiral touch changes in an increasing manner, and determines to reduce the screen when the amplitude of the spiral touch changes in a decreasing manner.

8. The apparatus of claim 7, wherein the controller determines a screen magnify or reduction ratio depending on a change pattern of the amplitude.

9. The apparatus of claim 6, wherein the controller determines a direction of the spiral touch, and determines to magnify or reduce the screen depending on the direction of the spiral touch.

10. The apparatus of claim 6, wherein the spiral touch comprises at least one of a spiral circle shaped touch and a spiral polygon shaped touch.
